Europäisches Patentamt

European Patent Office

Office européen des brevets

(11) Veröffentlichungsnummer: **0 360 970**
**A1**

(12) **EUROPÄISCHE PATENTANMELDUNG**

(21) Anmeldenummer: **89107672.1**

(22) Anmeldetag: **27.04.89**

(51) Int. Cl.⁵: **G06K 19/08**

(30) Priorität: **30.09.88 CH 3644/88**

(43) Veröffentlichungstag der Anmeldung:
**04.04.90 Patentblatt 90/14**

(84) Benannte Vertragsstaaten:
**AT BE CH DE FR GB LI NL**

(71) Anmelder: **Landis & Gyr Betriebs AG**

**CH-6301 Zug(CH)**

(72) Erfinder: **Antes, Gregor**
**Moussonstrasse 14**
**CH-8044 Zürich(CH)**

(54) **In zwei Richtungen auslesbares Strichkodefeld.**

(57) Ein Strichkodefeld (1) weist eine vorzugsweise quadratische Form auf und enthält einen Strichkode, dessen Strichelemente (5) und Hintergrundelemente (6) parallel zu einer Diagonalen des Strichkodefeldes (1) angeordnet sind. Ein an einer vorbestimmten Stelle des Strichkodefeldes (1) angebrachtes, künstlerisch gestaltetes Bildfeld (8) trennt Randzonen (9) ab, in denen der Strichkode auslesbar ist. Die Elemente (5, 6) und Teilflächen (10) sind mit Farbe auf einen Träger (2) gedruckt oder als Beugungselemente in den Träger (2) eingeprägt. Das mit Beugungselementen gestaltete Strichkodefeld (1) ist als Echtheitsmerkmal verwendbar.

EP 0 360 970 A1

## In zwei Richtungen auslesbares Strichkodefeld

Die Erfindung bezieht sich auf ein Strichkodefeld der im Oberbegriff des Anspruchs 1 genannten Art.

Solche Strichkodefelder eignen sich für eine maschinell optisch lesbare Kennzeichnung von Dokumenten, Kreditkarten und Waren aller Art.

Ein Strichkodefeld der im Oberbegriff des Anspruchs 1 genannten Art ist beispielsweise aus dem Detailhandel allgemein bekannt zur Kennzeichnung von Waren. Es enthält verschlüsselt eine numerische, maschinell optisch lesbare Information in quer zur Längsseite eines rechteckigen Strichkodefeldes angeordneten, verschieden breiten Strichelementen. Die Verschlüsselung kann nach einer der bekannten Normen erfolgen, wie beispielsweise MIL-STD-1189 oder "European Article Numbering Code" usw.. Der Strichkode ist parallel zwischen beiden Längsseiten des Strichkodefeldes auslesbar.

Als Trägermaterial dient meist Papier, wobei die Strichelemente im Strichkodefeld mittels eines einfachen Druckverfahrens in einer zum Hintergrund kontrastierenden Farbe auf einen Träger aufgebracht werden.

Aus der CH-PS 594 936 sind eingeprägte optische Markierungen mit einer lichtmodifizierenden Reliefstruktur bekannt, die Beugung, Brechung oder Reflexion von auffallendem Licht bewirken.

Die US-PS 4 652 733 beschreibt das maschinelle Auslesen von Informationen z. B. aus einem bebilderten Katalog. Für jedes Bild ist längs seiner Berandung ein Strichkodefeld vorgesehen.

Der Erfindung liegt die Aufgabe zugrunde, ein Strichkodefeld zu schaffen, das in wenigstens zwei einen Winkel zueinander bildenden Richtungen maschinell optisch auslesbar ist.

Die genannte Aufgabe wird erfindungsgemäss durch die Merkmale des Anspruchs 1 gelöst. Vorteilhafte Ausgestaltungen ergeben sich aus den Unteransprüchen.

Nachfolgend werden Ausführungsbeispiele der Erfindung anhand der Zeichnung näher erläutert.

Die einzige Zeichnungsfigur zeigt ein Strichkodefeld mit diagonal angeordeten Strichkodeelementen.

In der Figur bedeuten 1 ein Strichkodefeld, 2 einen Träger und 3 einen Gegenstand, der das Strichkodefeld 1 trägt. Der Gegenstand 3 ist in der Zeichnung nur mit zwei Seitenberandungen 4 angedeutet.

Das Strichkodefeld 1 enthält in einem Strichkode verschlüsselte Informationen, die mit einem optischen Leser maschinell auslesbar sind. Der Strichkode besteht aus einer Anzahl kodierter Zeichen, die ihrerseits aus einer vorbestimmten Anzahl viereckiger Strichelemente 5 und Hintergrundelemente 6 aufgebaut sind, die in der Ableserichtung verschiedene Breiten aufweisen. Die relativen Breiten der Elemente 5, 6 sind durch die gewählte Norm vorgeschrieben, z. B. ergänzen sie sich derart, dass die Breite eines einzelnen kodierten Zeichens im Strichkodefeldes 1 immer gleich gross bleibt.

Das Strichkodefeld 1 ist daher in mindestens zwei Teilflächengruppen eingeteilt. Die Strichelemente 5 der ersten Teilflächengruppe sind in der Zeichnung aus darstellerischen Gründen schwarz ausgezogen und wenigstens durch ein Hintergrundelement 6 getrennt. Die Strichelemente 5 und die Hintergrundelemente 6 sind an sich gleichwertige Elemente 5, 6 und der Informationsgehalt des Strichkodefeldes 1 kann auf beide Elemente 5, 6 verteilt sein, wie es die verwendete Kodierung vorbestimmt. Beispielsweise bilden die Hintergrundelemente 6 den Hintergrund, vor dem die Elemente 5 des Strichkodefeldes 1 erkennbar sind.

Das Strichkodefeld 1 weist eine zum Auslesen nutzbare Viereckform, z. B. ein Quadrat, vorbestimmter Grösse auf. Die an sich beliebig geformte Begrenzung des Strichkodefeldes 1 enthält die Viereckform vollständig. Das zum Auslesen nutzbare Viereck ist nur in der Zeichnung der besseren Darstellung wegen von sichtbaren Begrenzungslinien 7 begrenzt. Vorteilhaft sind wenigstens zwei der Begrenzungslinien 7 parallel zu den Seitenberandungen 4 ausgerichtet. Wenigstens ein Strichkodefeld 1 ist an einer vorbestimmten Stelle auf dem Gegenstand 3 angebracht. Die Elemente 5, 6 des Strichkodes bilden in ihrer vorbestimmten Reihenfolge Parallelen zu einer Diagonalen des Strichkodefeldes 1.

Das Strichkodefeld 1 kann in einem Winkelbereich von $\pm \beta$ beidseits einer Senkrechten zur dieser Diagonalen durch eine Ecke des Vierecks ausgelesen werden, wenn der Winkel dieser Ecke einen Wert von $2 \cdot \beta$ aufweist. Beispielsweise bei einem Quadrat ist der Winkel $\beta$ gleich $45°$.

Weist der Gegenstand 3 eine Rechteckform auf, wie z. B. eine Banknote oder eine Kreditkarte, ist der Strichkode parallel zu den beiden Seitenberandungen 4 maschinell optisch auslesbar, sofern die Begrenzungslinien 7 auf die Seitenberandung 4 ausgerichtet sind. Hier nicht gezeigte bekannte Mittel transportieren solche Gegenstände 3 in einer der beiden mittels der Begrenzungslinie 7 definierten Richtung. Ein hier nicht gezeigter optischer Leser kann in ein solches Transportmittel eingebaut werden und das Strichkodefeld 1 unabhängig von der Transportrichtung, d. h. längs oder quer zur Rechteckform des Gegenstandes 3 sowie vorwärts oder rückwärts im Strichkodefeld 1, auslesen.

Beispielsweise sind die Elemente 5, 6 symmetrisch oder spiegelbildlich zur Diagonalen im Strichkodefeld 1 angeordnet oder das Strichkodefeld 1 weist zwei Strichkode mit verschiedener Information beidseits der Diagonalen auf. Vorteilhaft begrenzen Hintergrundelemente 6 von vorbestimmter Breite den Strichkode, damit ein minimaler Abstand der äussersten Strichelemente 5 von den Ecken des Strichkodefeldes 1 gewährleistet ist und damit beim Auslesen nur Elemente 5, 6 des der Ableserichtung entsprechenden Strichkodes erfasst werden.

Es ist auch möglich, den Strichkode nur nur auf der einen Seite der Diagonalen anzuordnen.

In einer Abwandlung dieser Ausführungen enthält das durch Begrenzungslinien 7 definierte Quadrat des Strichkodefeldes 1 ein Bildfeld 8, wobei der Strichkode parallel zur Begrenzungslinie 7 in Randzonen 9 des Strichkodefeldes 1 auslesbar ist, die zwischen dem Bildfeld 8 und der Begrenzungslinie 7 gelegen sind. Die Fläche des Bildfeldes 8 ist durch eine künstlerische Darstellung in Teilflächen 10 eingeteilt und stellt alphanumerische Zeichen, Symbole, Abbildungen usw. dar.

Ist das Bildfeld 8 vom Strichkode völlig unabhängig, muss die Fläche des Bildfeldes 8 kleiner als das Strichkodefeld 1 sein, um das Auslesen des Strichkode nicht zu behindern. Beispielsweise weist die Bildfläche 8 die Form eines Quadrates auf, dessen Fläche die Hälfte der Fläche des Strichkodefeldes 1 beträgt.

Das Bildfeld 8 kann einen vom Strichkodefeld 1 unabhängigen Hintergrund aufweisen, der durch die künstlerische Darstellung bestimmt ist. Es ist auch möglich, dass die Strichelemente 5 und die Hintergrundelemente 6 den für die Bildgestaltung notwendigen Hintergrund bilden.

Der Strichkode kann auch in einer anderen Ausführung in die künstlerische Gestaltung des Bildes einbezogen werden, wobei die Strichelemente 5 in einer Farbe gedruckt sind, die nur im vorzugsweise infraroten Ausleselicht einen hohen Kontrast zu der Farbe der Hintergrundelemente 6 aufweist, und die Teilflächen 10 in wenigstens einer Farbe gedruckt sind, deren Kontrast zum Hintergrund im Ausleselicht des Lesers sehr gering ist. Im Tageslicht hingegen ist das Bild leicht erkennbar und der Strichkode unscheinbar.

Wenn der Strichkode nur nur auf der einen Seite der Diagonalen angeordnet ist, ist das Bildfeld 8 vorteilhaft in der Ecke angeordnet, die auf der vom Strichkode nicht bedeckten, von der Diagonale abgegrenzten Hälfte des Strichkodefeldes 1 liegt. Der Strichkode ist nur in den beiden Randzonen 9 ablesbar. Vorteilhaft sind beide Randzonen 9 gleich breit, wobei der gemeinsam überdeckte Teil des Strichkodefeldes 1 ein quadratisches Feld bildet. Die Strichelemente 5 sind vorteilhaft nicht kürzer als eine Diagonale dieses Feldes. In einer anderen Ausführung bleibt das quadratische Feld frei von den Elementen 5, 6.

Der Strichkode und das Bildfeld 8 sind beispielsweise in einem üblichen Druckverfahren auf den Träger 2 aufgebracht. Anstelle von Druckfarben kann der Strichkode in den Flächen der Strichelemente 5, der Hintergrundelemente 6 und der Teilflächen 10 eingeprägte Beugungselemente oder diffus streuende Mattstrukturen aufweisen.

Aber es ist auch möglich, andere lichtmodifizierende Reliefstrukturen zu verwenden, die eine Beugung, eine Brechung oder eine Reflexion von auffallendem Licht bewirken und die z. B. aus der CH-PS 594 936 bekannt sind.

Die Strichelemente 5, die Hintergrundelemente 6 und die Teilflächen 10 können sich beispielsweise im Absorptions- oder Streuvermögen, bzw. im Reflexions- oder im Beugungsverhalten des auf das Strichkodefeld 1 einfallenden Ausleselichtstrahls unterscheiden.

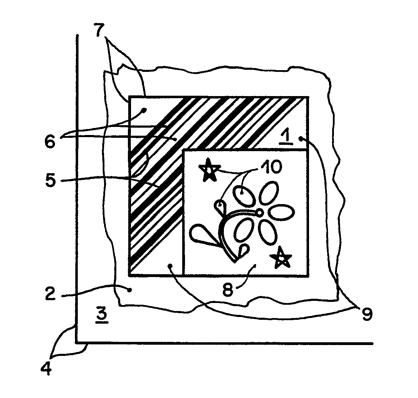

Vorteilhaft wird auch ein anderes Unterscheidungsmerkmal bestimmter Reliefstrukturen ausgenützt, die bei polarisiertem einfallendem Licht einer vorbestimmten Wellenlänge ein unterschiedliches Beugungsverhalten aufweisen. Diese Abhängigkeit ist besonders auffällig in der nullten Beugungsordnung bei ebener Polarisation, wie dies in R. Petit, Electromagnetic Theory of Gratings, Springer Verlag 1980, z. B. in Bild 6.105 beschrieben ist. Bei einer Beleuchtung mit einem unpolarisierten, polychromatischen Licht ist ein solcher Strichkode für das unbewaffnete Auge nicht sichtbar.

Auch eine Kombination von aufgedruckten und eingeprägten Flächen 5, 6, 10 ist denkbar.

Der Träger 2 besteht aus einem für die Massenproduktion von Strichkodefeldern 1 ausgewählten Material mit einer geeigneten Oberfläche.

Weist der aus einem geeigneten Material hergestellte Gegenstand 3 eine verwendbare Oberfläche auf, kann das Strichkodefeld 1 ohne Träger 2 unmittelbar auf den Gegenstand 3 aufgebracht werden, z. B. mittels eines Druckverfahrens auf Papier oder durch direktes Einprägen in die Oberfläche des Gegenstandes 3.

Ist der Gegenstand 3 für das Aufbringen des Strichkodes ungeeignet, kann der Träger 2 des Strichkodefeldes 1 auf dem Gegenstand 3 als Etikett befestigt werden. Beispielsweise ist der Träger 2 auf seiner Rückseite mit einer Klebeschicht ausgerüstet, damit er sich beim Anbringen mit dem Gegenstand 3 derart fest verbindet, dass das Strichkodefeld 1 bei einem Ablöseversuch zerstört wird. Vorteilhaft ist diese Ausführung, wenn das Strichkodefeld 1 eine Sicherheitsfunktion erfüllt oder ein Echtheitsmerkmal darstellt.

Die Form des Strichkodefeldes 1 beschränkt sich nicht auf ein Quadrat. An sich sind beliebige Begrenzungslinien 7 möglich, lediglich sind zwei senkrecht zueinander angeordnete Parallelogramme für die Randzonen 9 vorzusehen, die den Strichkode enthalten. Ein Quadrat ist jedoch als Form des Strichkodefeldes 1 vorteilhaft, da der verfügbare Platz für den Strichkode optimal ausgenützt wird.

**Ansprüche**

1. Strichkodefeld zur Kennzeichnung eines Gegenstandes, das eine vorbestimmte Information zum maschinellen optischen Ablesen enthält, dadurch gekennzeichnet, dass die Elemente (5, 6) des Strichkodes in einem Viereck von vorbestimmter Grösse angeordnet sind und dass sie in ihrer vorbestimmten Reihenfolge Parallelen zu einer Diagonalen des Strichkodefeldes (1) sind.

2. Strichkodefeld nach Anspruch 1, dadurch gekennzeichnet, dass das Viereck die Form eines Quadrates aufweist.

3. Strichkodefeld nach Anspruch 1 oder 2, dadurch gekennzeichnet, dass die Elemente (5, 6) im Strichkodefeld (1) nur auf der einen Seite von dessen Diagonalen angeordnet sind.

4. Strichkodefeld nach einem der vorhergehenden Ansprüche, gekennzeichnet, dass das Strichkodefeld (1) ein Bildfeld (8) aufweist und dass der Strichkode in Randzonen (9) parallel zu einer Begrenzungslinie (7) auslesbar ist.

5. Strichkodefeld nach einem der vorhergehenden Ansprüche, dadurch gekennzeichnet, dass das Bildfeld (8) in einer Ecke des Strichkodefeldes (1) angeordnet ist, die auf einer vom Strichkode nicht bedeckten, von der Diagonale abgegrenzten Hälfte des Strichkodefeldes (1) liegt, und dass der Strichkode nur in zwei Randzonen (9) parallel zur Begrenzungslinie (7) auslesbar ist.

6. Strichkodefeld nach Anspruch 4 oder 5, dadurch gekennzeichnet, dass eine das Bildfeld (8) in Teilflächen (10) einteilende Darstellung eine künstlerische Gestaltung aufweist.

7. Strichkodefeld nach einem der vorhergehenden Ansprüche, dadurch gekennzeichnet, dass die Elemente (5, 6) und die Teilflächen (10) in einem Druckverfahren aufgebrachte lichtabsorbierende Farbflächen aufweisen.

8. Strichkodefeld nach einem der Ansprüche 1 bis 6, dadurch gekennzeichnet, dass die Elemente (5, 6) und die Teilflächen (10) lichtmodifizierende Reliefstrukturen aufweisen, die eine Beugung, eine Brechung, eine Streuung oder eine Reflexion von auffallendem Licht bewirken.

9. Strichkodefeld nach einem der Ansprüche 1 bis 6, dadurch gekennzeichnet, dass die Elemente (5, 6) und die Teilflächen (10) nur mittels polarisiertem Licht einer vorbestimmten Wellenlänge erkennbare lichtmodifizierende Reliefstrukturen aufweisen.

10. Strichkodefeld nach einem der vorhergehenden Ansprüche, dadurch gekennzeichnet, dass ein Träger (5) des Strichkodefeldes (1) eine Klebeschicht aufweist und als Klebe-Etikett ausgebildet ist.

11. Mit einem Strichkodefeld nach einem der vorhergehenden Ansprüche versehener Gegenstand, dadurch gekennzeichnet, dass der Gegenstand (3) eine Rechteckform aufweist und dass Begrenzungslinien (7) des Strichkodefeldes (1) parallel zur Seitenberandung (4) ausgerichtet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 590 366 (R.E. ROTHFJELL) * Figur 2; Spalte 3, Zeilen 39-42; Spalte 4, Zeilen 1-9; Spalte 5, Zeilen 3-8 * | 1-2,5 | G 06 K 19/08 |
| Y | | 8,9 | |
| | --- | | |
| A | DE-A-2 148 540 (BLISS & LAUGHLIN IND.) * Seite 13, Zeilen 1-6; Figur 10B * | 4 | |
| | --- | | |
| D,Y | CH-A- 594 936 (LGZ LANDIS) * Insgesamt * | 8 | |
| | --- | | |
| D,Y | R. PETIT: "Electromagnetic theory of gratings", 1980, Seiten 221-223, Springer-Verlag, Berlin, DE * Insgesamt * | 9 | |
| | ----- | | |

| | RECHERCHIERTE SACHGEBIETE (Int. Cl.5) |
|---|---|
| | G 06 K |

Der vorliegende Recherchenbericht wurde für alle Patentansprüche erstellt

| Recherchenort | Abschlußdatum der Recherche | Prüfer |
|---|---|---|
| DEN HAAG | 14-12-1989 | HENROTTE I. |